# EUROPÄISCHE PATENTSCHRIFT

(11) **EP 3 534 145 B1**
(45) Veröffentlichungstag und Bekanntmachung des Hinweises auf die Patenterteilung: **02.08.2023**
(21) Anmeldenummer: 19158575.1
(22) Anmeldetag: 21.02.2019
(51) Int. Cl.: G01N 17/00, G01N 19/04

(54) **FUGENVERSUCHSSTAND**
JOINT TEST BENCH
BANC D'ESSAI DE JOINTS D'ÉTANCHÉITÉ

(30) Priorität: 28.02.2018 DE 202018101106 U
(43) Veröffentlichungstag der Anmeldung: 04.09.2019
(73) Patentinhaber: Bundesrepublik Deutschland, vertreten durch den Bundesminister für Wirtschaft und Energie, 12205 Berlin (DE)
(72) Erfinder: RECKNAGEL, Christoph, 12623 Berlin (DE); PIRSKAWETZ, Stephan, 12305 Berlin (DE); KITTLER-PACKMOR, Kai, 14469 Potsdam (DE); WOLTER, Patrick, 10409 Berlin (DE); BUCHHEIM, Janine, 01099 Dresden (DE)
(74) Vertreter: Zimmermann & Partner Patentanwälte mbB

(56) Entgegenhaltungen:
- CN-A- 105 136 565
- DE-A1- 19 644 094
- US-A1- 2005 193 829

## Beschreibung

Die vorliegende Erfindung betrifft einen Fugenversuchsstand, insbesondere einen Alterungs- bzw. Ermüdungsversuchsstand zur realitätsnahen Untersuchung der Funktionsfähigkeit, der Leistungseigenschaften und/oder des Alterungs- sowie Ermüdungsverhaltens von Fugen, Verbundbaustoffen und gefügter Bauteile (Verbundsysteme) der Bautechnik, insbesondere von Ingenieurbauwerken wie bspw. Fahrbahnen.

Die Wirkmechanismen von Fugenfüllungen zur Sicherstellung einer dauerhaften Funktionsfähigkeit unter den maßgebenden Einwirkungen sind bis heute trotz der hohen Relevanz nicht abschließend untersucht. Das derzeitig angewendete Prüfinstrumentarium ist überwiegend auf das Verhalten unter Kurzzeitalterung oder auf Teilaspekte abgestellt. Das Gebrauchsverhalten der Fugenfüllung, insbesondere das Leistungsvermögen und die Funktionsfähigkeit, als auch die gewünschte Langzeitdauerhaftigkeit unter andauernder, komplexer Beanspruchung wird dabei nicht erfasst. US 2005/0193 829 A1 zeigt eine Vorrichtung 1 zur Prüfung von Materialeigenschaften hinsichtlich kombinierter Zug- und Scherbelastungen, insbesondere zur Prüfung von Klebstoffen ("adhesives"). Dieses Gerät verfügt über eine Vorrichtung 2 zum Aufbringen der Kraft und eine Messvorrichtung 3. Die zylinderförmigen Prüflinge 5, 5a werden über die Prüflingsaufnahmen 4 an der Vorrichtung 1 befestigt. An den Stirnseiten der Prüflinge werden Klebeflächen 6 gebildet, die mit dem zu prüfenden Klebstoff 7 verklebt werden.

Im Hinblick auf das oben Gesagte, schlägt die vorliegende Erfindung einen Fugenversuchsstand gemäß Anspruch 1 vor.

Gemäß einer Ausführungsform umfasst ein Fugenversuchsstand eine Bewitterungskammer, eine mechanische Beanspruchungseinheit, und einen von der mechanischen Beanspruchungseinheit gehaltenen und in der Bewitterungskammer angeordneten Probekörper. Der Probekörper weist eine typischerweise gerade Fuge mit einer Fugenbreite und einer Fugenlänge auf, die zumindest um einen Faktor 25, typischer zumindest um einen Faktor 30, noch typischer zumindest um einen Faktor 33 größer ist als die Fugenbreite. Der Probekörper kann mittels der mechanischen Beanspruchungseinheit in zumindest zwei, zueinander nicht parallelen Richtungen mechanisch belastet werden.

Das bedeutet insbesondere, dass durch die mechanische Beanspruchungseinheit zwei durch die Fuge (Raumfuge) voneinander beabstandete und über die Fuge miteinander verbundene Teilkörper relativ zueinander in die jeweilige Richtung bewegt werden. Im Folgenden werden einander gegenüberliegenden Seitenflächen der Teilkörper, zwischen denen die Fuge gebildet ist, auch als jeweilige Fugenflanke bezeichnet.

Typischerweise ist die Beanspruchungseinheit zu dem eingerichtet, die Teilkörper relativ zueinander in die jeweilige Richtung zeitabhängigen Bewegungsprofilen auszusetzen, oder sogar die Teilkörper relativ zueinander und synchronisiert in die jeweilige Richtung zeitabhängigen Bewegungsprofilen auszusetzen.

Der Begriff "Fuge", wie er vorliegend verwendet wird, soll insbesondere einen gewollten, Spalt oder Zwischenraum zwischen zwei Teilkörpern, Bauteilen oder Materialien beschreiben. Insbesondere kann es sich bei der Fuge um eine Raumfuge handelt. Die (Raum-)Fuge ist typischerweise zumindest teilweise mit einem Füllmaterial oder einem Füllsystem gefüllt, das die zwei Teilkörper miteinander verbindet. Dementsprechend kann über das Füllmaterial eine Kraftübertragung zwischen den Teilkörpern erfolgen. Dabei ist das Füllmaterial bzw. Füllsystem typischerweise so in der Fuge angeordnet, dass je nach Gebiet über typischerweise sehr lange Zeiträume ein Eindringen und/oder Entweichen von Gasen, Flüssigkeiten und/oder Feststoffpartikeln in die Fuge oder in einen durch die Fuge abgedichteten angrenzenden Raum verhindert werden kann. Beispielsweise soll das Füllmaterial bzw. des Füllsystem in Straßenfugen das Eindringen von Wasser, Benzin, Diesel, Salzen und Sand verhindern, wobei an besonders gefährdeten Stellen wie Tankstellen erhöhte Anforderungen an die Dichtigkeit gelten können. Das Verhindern des Eindringens von Gasen kann beispielsweise bei Glasvitrinen für Ausstellungen und Museen wichtig sein.

Typischerweise haben die beiden Teilkörper, die gleiche Geometrie. Die beiden Teilkörper können sogar identisch aufgebaut sein, aber auch aus unterschiedlichen Materialien bestehen.

Der Probekörper kann zudem auch zwei sich kreuzende Fugen bzw. vier aufeinander zulaufende und miteinander verbundene Fugensegmente, z.B. zwei sich kreuzende gerade Fugen aufweisen.

Insbesondere kann der Probekörper vier durch die zwei sich kreuzenden Fugen voneinander beabstandete Teilkörper aufweisen. Mit einem derartigen Probekörper kann bei geeigneter Materialwahl des Probekörpers im Fugenversuchsstand bspw. das Verhalten von Fugen in Kreuzungsbereichen von Fahrbahnen unter Belastung realitätsnah untersucht werden.

Wenn sich die zwei Fugen in einem Winkel von 90° kreuzen, haben die vier Teilkörper typischerweise die gleiche Geometrie. Andere Kreuzungswinkel zwischen den Fugen sind aber auch möglich.

Beim mechanischen Belasten (Bewegung der Fugenflanken relativ zueinander) entstehen Spannungen im sich deformierenden Fugenmaterial. Bei besonderen Fugen (z.B. in geklebten Glasfassaden) ist eine Kraftübertragung zwischen den Bauteilen durch die jeweilige Fuge sogar gewünscht.

Die Füllung der Fuge und deren Haftverbund zu den Fugenflanken (inklusive eventueller Haftvermittler) als auch die gewählte konstruktive Gestaltung der Fuge und die gewählte Materialkombination(en) kann im Fugenprüfstand insbesondere hinsichtlich der Funktion und der Langzeitstabilität untersucht werden.

Außerdem kann vorgesehen sein, dass der Probekörper durch die mechanische Beanspruchungseinheit in die jeweilige Richtung weisenden Kräften ausgesetzt werden kann, sodass im Probekörper, insbesondere im Füllmaterial der Fuge sowie angrenzenden Bereichen des Probekörpers mechanische Spannungen entstehen. Dabei erreichen die Kräfte (zumindest zeitweise) typischerweise so große Werte, von zum Beispiel zumindest 50 kN, 100 kN oder sogar mehr, dass die Fugenflanken relativ zueinander im Bereich bis zu einigen Millimetern bewegt werden und der Probekörper (das Füllmaterial der Fuge) entsprechend deformiert wird. Typischerweise ist die Beanspruchungseinheit zu dem eingerichtet, den Probekörper zeitabhängigen Kraftprofilen auszusetzen.

Simulationen der während der mechanischen Beanspruchung im Probekörper auftretenden mechanischen Spannungen für gerade Fugen zeigen, dass das Verhalten realer Fugensysteme nur bei einem hinreichend großen Verhältnis von Fugenlänge zu Fugenbreite des Probekörpers realitätsnahe im Versuchstand abgebildet werden kann. Anderenfalls können Querkontraktionen bzw. Querdehnungen zu einer Verfälschung bzw. einer Abweichung von dem im Versuchstand nachzubildenden Verhalten, insbesondere des Langzeitverhaltens realer, längerer Fugen führen.

Gemäß einer Ausführungsform umfasst ein Fugenversuchsstand eine Bewitterungskammer, eine mechanische Beanspruchungseinheit, und einen von der mechanischen Beanspruchungseinheit gehaltenen und in der Bewitterungskammer angeordneten Probekörper. Der Probekörper kann mittels der mechanischen Beanspruchungseinheit in zumindest zwei, zueinander nicht parallelen Richtungen mechanisch belastet werden. Der Probekörper weist eine Fuge auf, die so dimensioniert ist, dass in der Fuge über mindestens 90% der Fugenlänge mindestens 90% der jeweils maximalen mechanischen Spannungen auftreten, wenn der Probekörper mittels der mechanischen Beanspruchungseinheit in zumindest einer der zumindest zwei Richtungen mechanisch belastet wird.

Mit dem Fugenversuchsstand kann der Probekörper komplexen chemischen und physikalischen Beanspruchungstests in Abhängigkeit von der Zeit ausgesetzt werden. Insbesondere wird die Untersuchung der Wirkkombination langsamer und/oder schneller mechanischer Beanspruchung sowie deren Überlagerung bei gleichzeitigen normalen und/oder außergewöhnlichen klimatischen Beanspruchungen an realitätsgetreuen Systemausschnitten und somit eine realitätsnahe Dauerhaftigkeitsanalyse sowie Untersuchung des Degradationsverhaltens von Fugen bzw. Fugenfüllsystemen (Fugenkonstruktionen) ermöglicht. Damit lassen sich Fehleinschätzungen und daraus resultierende, üblicherweise sehr teure Schäden an Bauwerken vermeiden, die auf Basis einer differentiellen Beanspruchungsuntersuchung ("singleloading") entstehen können.

Typischerweise ist die mechanische Beanspruchungseinheit zumindest teilweise in der Bewitterungskammer angeordnet.

Die Bewitterungskammer kann eine Bestrahlungseinheit, zum Beispiel eine UV-Bestrahlungseinheit, eine Temperiereinheit, einen Temperatursensor, eine Beregnungseinheit, eine Befeuchtungseinheit, einen Feuchtigkeitssensor, und/oder eine Begasungseinheit aufweisen.

Außerdem ist die Bewitterungskammer typischerweise mit einer Medienver- und/oder Entsorgungseinheit verbunden.

Bei dem Probekörper handelt es sich typischerweise um eine Systemprobekörper, d.h. um eine Nachbildung eines (repräsentativen) Ausschnitts einer Fuge bzw. eines Fugensystems eines Bauwerks.

Der Probekörper kann im Aufbau einer Fugenausbildung in Ingenieurbauwerken des Straßenbaus und/oder Tiefbaus entsprechen.

So kann der Probekörper im Aufbau einer Fahrbahndecke, insbesondere einem Fahrbahnausschnitt mit einer Fuge, aber auch einer Fugenausbildung im Brückenbau, oder einer Fugenausbildung eines Tunneltrogs entsprechen.

Der Probekörper kann im Aufbau aber auch einer Fugenausbildung in Ingenieurbauwerken des Hoch- und/oder Fassadenbaus entsprechen.

Außerdem kann in der Fuge ein kinematisches Hilfssystem angeordnet sein. Beispielsweise können Federn, und/oder Platten zur Verformungs-/ bzw. Spannungsverteilung und/oder sogar ein Fahrbahnübergangssystem in der Fuge angeordnet sein.

Typischerweise weist der Probekörper eine Höhe von zumindest 15 cm, eine Breite von zumindest 30 cm oder sogar zumindest 50 cm und/oder eine Tiefe von zumindest 50 cm oder sogar zumindest 100 cm auf.

Der Probekörper kann mehrlagig, mehrschichtig und/oder mehrteilig sein.

Typischerweise ist die Fuge eine Dehnfuge, insbesondere eine Raumfuge.

Typischerweise erstreckt sich die Fuge von einer Deckfläche des Probekörpers bis zu einer Grundfläche des Probekörpers.

Außerdem erstreckt sich die Fuge typischerweise zwischen zwei einander gegenüberliegenden Seitenflächen des Probekörpers.

Dementsprechend kann der Probekörper zwei durch die Fuge voneinander beabstandete oder sogar getrennte Teilkörper aufweisen.

Typischerweise ist die Fuge zumindest teilweise gefüllt. Insbesondere kann die Fuge teilweise gefüllt sein, z.B. nur in einem oberen Abschnitt.

So kann in der Fuge, z.B. im oberen Abschnitt, ein Unterfüllprofil, insbesondere ein PE-Schaumprofil angeordnet sein.

Außerdem kann sich die Fuge in einer zu den zwei zueinander orthogonalen Richtungen senkrechten dritten Richtung, die typischerweise eine vertikale Richtung ist, zumindest abschnittsweise (nach unten hin) verjüngen.

Fugenlänge und Fugenbreite entsprechen daher jeweiligen größten Ausdehnungen der Fuge in zwei zueinander orthogonalen (horizontalen) Richtungen.

Der Probekörper und/oder zumindest einer der Teilkörper, typischerweise beide Teilkörper können je nach dem nachzubildenden realen Fugensystem einen Kunststoff, Glas, Holz, Stahl, Aluminium, Asphalt und/oder Beton enthalten oder sogar daraus bestehen.

Bei dem Asphalt kann es sich um einen hohlraumreichen, hochflexiblen, und/oder besonders standfesten Sonderasphalt handeln.

Bei dem Beton kann es sich um einen hohlraumreichen und/oder duktilen Sonderbeton, insbesondere einen Fahrbahndeckenbeton in Waschbetonbauweise handeln.

Typischerweise ist die mechanische Beanspruchungseinheit eingerichtet, den Probekörper unabhängig voneinander (und typischerweise sogar zeitlich parallel zueinander) in die zwei, zueinander nicht parallelen Richtungen mechanisch zu belasten. Dadurch lassen sich viele Belastungsszenarien realitätsgetreuer im Fugenversuchsstand nachbilden.

Außerdem ist die mechanische Beanspruchungseinheit typischerweise eingerichtet, den Probekörper in drei, zueinander nichtparallelen, insbesondere zueinander orthogonalen Richtungen mechanisch zu belasten, noch typischer unabhängig voneinander (und typischerweise sogar zeitlich parallel zueinander) in den drei Richtungen mechanisch zu belasten.

Typischerweise ist die mechanische Beanspruchungseinheit eingerichtet, den Probekörper sowohl Zugspanngen als auch Druckspannungen auszusetzen.

Bei der mechanischen Beanspruchungseinheit kann es sich um Beanspruchungseinheit mit spezifischen kinematischen Eigenschaften handeln, die mit einer hohen Richtungsstabilität von typischerweise mindestens 100 µm für jede Achse (Richtung) auch unter Querbelastung den Probekörper mechanisch belasten kann. Dabei kann die mechanische Beanspruchungseinheit für millionenfache langhubige (>=1 mm), kurzhubige (< 1mm) Belastungen und/oder Überlagerungen von langhubigen und kurzhubigen mechanischen Beanspruchungen des Probekörpers ausgelegt sein.

Typischerweise kann die mechanische Beanspruchungseinheit gegenüberliegende Fugenflanken, diagonal gegenüberliegende Kanten des Probekörpers, diagonal gegenüberliegende Ecken des Probekörpers und/oder die beiden Teilkörper mit bis zu zumindest 3 Hz, bis zu zumindest 8 Hz, bis zu zumindest 16 Hz oder sogar bis zu zumindest 20 Hz in jeder der Richtungen um bis zu +/- 2 mm gegeneinander verschieben.

In einer der Richtungen, typischerweise der vertikalen Richtung kann die mechanische Beanspruchungseinheit die Fugenflanken die diagonal gegenüberliegenden Kanten und/oder Ecken bzw. Teilkörper des Probekörpers mit bis zu zumindest 3 Hz, bis zu zumindest 8 Hz, bis zu zumindest 16 Hz oder sogar bis zu zumindest 20 Hz in jeder der Richtungen sogar um bis zu +/- 5 mm gegeneinander verschieben.

Außerdem kann die mechanische Beanspruchungseinheit eingerichtet sein, den Probekörper in zumindest einer der Richtungen, in zwei der Richtungen oder sogar in allen drei Richtungen dynamisch schwellenden, dynamisch wechselnden und/oder impulsartigem Belastungen auszusetzen, z.B. Impulsstöße mit bis zu mindestens 50 Hz.

Typischerweise ist die mechanische Beanspruchungseinheit eingerichtet, mehrere Probekörper in der Klimakammer gleichzeitig mechanisch zu belasten. Dazu kann die mechanische Beanspruchungseinheit modular aufgebaut sein. Insbesondere kann die mechanische Beanspruchungseinheit mehrere typischerweise zumindest im Wesentlichen identisch aufbaubare oder sogar zumindest im Wesentlichen identisch aufgebaute mechanische Belastungsmodule aufweisen. Dadurch kann zudem eine flexiblere und/oder einfachere Anpassung an verschiedene Probekörpergeometrien ermöglicht werden. Im Folgenden werden die mechanischen Belastungsmodule verkürzend auch als Belastungsmodule bezeichnet.

Die mechanischen Belastungsmodule können mechanisch miteinander verbunden sein und/oder entlang einer Achse angeordnet sein, die typischerweise parallel zu einer horizontalen, mechanischen Belastungsrichtung ist.

Während des gleichzeitigen Belastens mehrerer Probekörper können die Fugen der Probekörper parallel zueinander ausgerichtet sein. Auf diese Weise lassen sich statistische Aussagen zur Belastung der Fuge schneller gewinnen.

Alternativ dazu oder ergänzend können die Fugen zumindest einiger der mehreren Probekörper gewinkelt zueinander von der Beanspruchungseinheit gehalten bzw. mechanisch belastet werden. Dadurch lassen sich Abhängigkeiten der Belastung als Funktion eines Fugenanstellwinkels zum Beispiel bezogen auf eine Probenlängskante effizient untersuchen.

Typischerweise kann die mechanische Beanspruchungseinheit Kräfte in einem großen Bereich auf den Probekörper ausüben.

Insbesondere kann die mechanische Beanspruchungseinheit eingerichtet sein, den Probekörper in die jeweilige Richtung mit Kräften von zumindest 1 N oder zumindest 10 N und/oder von bis zu 150 kN oder sogar bis zu 250 kN zu belasten. Dabei kann vorgesehen sein, dass die Beanspruchungseinheit die größten Kräfte in eine horizontale Richtung ausübt, die senkrecht zu einer Längsrichtung der Fuge ist.

Die Kräfte auf den Probekörper werden typischerweise mittels eines jeweiligen Linearantriebs der mechanischen Beanspruchungseinheit ausgeübt.

Die Linearantriebe können einen Motor, insbesondere einen Elektromotor, oder einen Zylinder mit Kolben sowie eine mit dem Zylinder fluidisch verbundene Hydraulikpumpe oder Pneumatikpume aufweisen. Insbesondere können die Linearantriebe servo-hydraulisch ausgeführt sein. Insbesondere kann der jeweilige Linearantrieb ein so genannter Hydraulikzylinder sein, d.h. eine hydraulische Antriebseinheit inklusive Zylinder, Kolben, Kolbenstage etc..

Typischerweise weist die mechanische Beanspruchungseinheit eine Aufnahme für den Probekörper auf, in der der Probekörper fixiert bzw. fixierbar ist.

Die Aufnahme kann zwei Aufspannplatten aufweisen, z.B. zwei Aufspannplatten über denen zwei Teilkörper eines Probekörpers mit nur einer Fuge angeordnet und fixiert werden können, die typischerweise über die Linearantriebe relativ zueinander bewegbar sind.

Aufgrund der hohen Richtungsstabilität der mit jeweils einer Aufspannplatten verbundenen Linearantriebe führt eine Verschiebung einer Fugenflanke (und damit der Fugenflanken zueinander) in eine vorgegebene jeweilige Richtung nicht zu einer unerwünschten Verschiebung dieser Flanke in einer anderen Richtung. Da der jeweilige Linearantrieb nur mit einer der beiden Aufspannplatten verbunden ist, wird dabei außerdem die gegenseitige Fugenflanke nicht verschoben. Dementsprechend können gezielt Querkräfte (und möglicherweise Momente) in das Füllmaterial der Fuge eingetragen werden. Die hohe Richtungsstabilität der Linearantriebe ermöglicht zudem eine genaue Messung und Regelung der Fugenbewegung. Die Linearantriebe bleiben dabei zumindest im Wesentlichen Querkraft- und Momentenfrei.

Dabei kann vorgesehen sein, dass jede Aufspannplatte mit einem jeweiligen Linearantrieb verbunden ist.

In Ausführungsformen, in denen der Probekörper mittels der mechanischen Beanspruchungseinheit in drei zueinander nicht parallelen Richtungen mechanisch belastbar ist, ist typischerweise eine der Aufspannplatten mit einem Linearantrieb verbunden (und von diesem bewegbar), während die weitere der zwei Aufspannplatten mit zwei Linearantrieben verbunden (und von diesen bewegbar) ist.

In Ausführungsformen, in denen der Probekörper zwei sich kreuzende Fugen aufweist, weist die Aufnahme typischerweise vier Aufspannplatten auf.

Die vier Aufspannplatten können paarweise in mindestens eine der zumindest zwei, zueinander nicht parallelen Richtungen relativ zueinander bewegbar sind.

Die vier Aufspannplatten können aber auch paarweise in zwei oder sogar alle der zumindest zwei, zueinander nicht parallelen Richtungen relativ zueinander verschiebbar (belastbar) sein.

Insbesondere kann bei einem modularen Aufbau der mechanischen Beanspruchungseinheit vorgesehen sein, dass die mechanischen Belastungsmodule jeweils zwei Aufspannplatten aufweisen, die typischerweise mittels jeweilige Linearantriebe der Belastungsmodule verschiebbar (belastbar) zueinander sind.

Dabei kann es für Belastungstest ausreichend sein, wenn eine der zwei Aufspannplatten in eine vertikale Richtung und die andere der zwei Aufspannplatten eines mechanischen Belastungsmoduls in horizontale Richtung(en) verschiebbar (belastbar) zueinander sind.

Für Belastungstests eines Probekörper mit vier Teilkörpern (zwei sich kreuzende Fugen) kann es bei geeigneter Aufteilung sogar ausreichend, wenn drei der vier Aufspannplatten nur in eine jeweils andere von drei zueinander nichtparallelen Richtungen verschiebbar (belastbar) ist und die vierte der vier Aufspannplatten in zwei der drei zueinander nichtparallelen Richtungen bzgl. der anderen Aufspannplatten verschiebbar (belastbar) ist. Dementsprechend sind weniger Antriebe (Linearantriebe) erforderlich. Bei einem Wechsel der Probekörper (zu Probekörpern mit nur einer Fuge) sind dann aber ggf. Nachrüstungen der Antriebe vorzunehmen.

Typischerweise ist aber auf jeder der (zwei oder vier) Aufspannplatten eine an der jeweiligen Aufspannplatte befestigte Halterung für einen jeweiligen Teilkörper des Probekörpers angeordnet.

Außerdem kann die mechanische Beanspruchungseinheit eine Rollbeanspruchungseinheit aufweisen, die ein auf den Probekörper absenkbares und motorisch antreibbares Rad aufweist. Damit lassen sich Belastungen der Fuge durch rollende Reifen im Fugenversuchsstand besonders realistisch nachbilden.

Typischerweise weist der Fugenversuchsstand eine Regel-und/oder Steuereinheit auf, die zumindest mit der typischerweise steuerbar oder sogar regelbar ausgeführten mechanischen Beanspruchungseinheit verbunden ist.

Außerdem weist der Fugenversuchsstand typischerweise eine typischerweise benachbart zu der Fuge angeordnete und mit der Regel-und/oder Steuereinheit verbundene Detektionseinheit auf.

Die Detektionseinheit kann einen Dehnungssensor oder sogar mehrere Dehnungssensoren für die Fuge und/oder einen Dichtigkeitssensor oder sogar mehrere Dichtigkeitssensoren für die Fuge aufweisen.

Als Dehnungssensoren können beispielsweise optische oder induktive Sensoren verwendet werden.

Als Dichtigkeitssensoren können unterhalb der Fuge angeordnete optische oder elektrische Flüssigkeitsdetektoren oder eine an der Fuge angeordnete Unterdrucksaugglocke in Verbindung mit einem Drucksensor dienen.

Als optischer Detektor kann eine Kamera, zum Beispiel eine unterhalb der Fuge angeordnete Kamera wie eine Endoskopkamera, ein Lasersystem, aber auch ein am Probekörper angebrachter faseroptischer Sensoren dienen.

Mittels einer Kamera kann auch eine etwaige Rissbildung in der Fuge während der mechanischen Belastung detektiert bzw. ihr zeitliches Verhalten verfolgt werden.

Außerdem weist die Detektionseinheit typischerweise einen oder mehrere Kraftsensoren auf, mit denen die auf den Probekörper während des mechanischen Belastens ausgeübten Kräfte in eine oder sogar allen Richtungen unabhängig voneinander mit einer hinreichend hohen Genauigkeit von typischerweise 0.1%, z.B. 1 N gemessen werden können.

Typischerweise können vom Kraftsensor übermittelte Messwerte von der in die Regel- und/oder Steuereinheit integrierten oder separaten Auswerteeinheit anhand vorgegebener Kriterien berechnet bzw. aufbereitet und anschließend bewertet werden.

So kann ein während des Bewegens der Fugenflanken des Probekörpers durch die Regel- und/oder Steuereinheit detektierter Abfall/Anstieg einer gemessenen Kraft, der außerhalb eines vorgegebenen Bereiches liegt, ein Hinweis auf oder sogar ein Maß für eine Alterung des Füllsystems oder eine Rissbildung (und/oder einen kohäsiven Haftverlust) in der Fugenmasse sein. Genauere Aussagen zur Funktionsfähigkeit, den Leistungseigenschaften und des Alterungs- bzw. Ermüdungsverhaltens können typischerweise durch eine Analyse von Veränderungen zeitlicher Abschnitte von Kraft-Verformungs-Diagrammen (Hysteresekurven) erhalten werden.

Außerdem können die gemessenen Kräfte auch zur Regelung der Belastung genutzt werden.

Beispielsweise kann vorgesehen sein, dass die Regel-und/oder Steuereinheit die mechanischen Beanspruchungseinheit so regelt, dass die Fugenflanken des Probekörpers nach einem vorgegebenen (programmierten) Ablauf relativ zueinander bewegt werden. Als Regelgröße dient dabei typischerweise üblicherweise die Fugenbewegung.

Als Kraftsensoren können beispielsweise Federkörper-Kraftaufnehmer und Dehnungsmessstreifen (DMS) verwendet werden. Außerdem können die Sensoren kombinierte Kraft-und Dehnungssensoren sein.

Alternativ oder ergänzend kann in Ausführungsformen, bei denen Hydraulikzylinder als Linearantriebe eingesetzten werden, vorgesehen sein, die Kräfte über Differenzdrücke in den Hydraulikzylindern zu bestimmen.

Typischerweise ist Regel-und/oder Steuereinheit mit der mechanische Beanspruchungseinheit, der Bewitterungskammer(steuerung/regelung), der Detektionseinheit, einer chemischen Belastungseinheit und optional mit der Medienver- und/oder Entsorgungseinheit (155) verbunden.

Die Regel-und/oder Steuereinheit kann modular aufgebaut sein. Beispielsweise können die chemische Belastungseinheit, die mechanische Belastungseinheit und die Bewitterungskammer jeweils eine eigene Regel- oder Steueruntereinheit aufweisen, die zum Synchronisieren miteinander über entsprechende Signalwege (z.B. Signalleitungen) verbunden sind. Dadurch kann beispielsweise sichergestellt werden, dass die mechanische Belastung des Probekörpers erst dann beginnt, wenn eine bestimmte Temperatur erreicht ist.

Systemkomponenten sind somit typischerweise sowohl voneinander unabhängig als auch voneinander abhängig steuer- bzw. regelbar und je nach gewünschtem Versuchsverlauf einzeln kombinierbar.

Dabei ist die Regel-und/oder Steuereinheit typischerweise eingerichtet ist, den Probekörper einem kombinierten mechanischen und klimatischen Belastungsprofil (kombinierte Deformationsprofile, UV-, Feuchte-, Temperatur- und Beregnungsprofile) auszusetzen. Beispielsweise kann so die Belastung einer Fahrbahnfuge durch Fahrzeuge und klimatische Einflüsse, mit vergleichsweise geringem Aufwand und typischerweise in kürzerer Zeit als in einem Freilandversuch analysiert werden. Insbesondere kann eine jährliche kombinierte Belastung innerhalb weniger Wochen im Fugenversuchsstand zumindest realitätsnah nachgebildet werden.

Typischerweise kann die Regel-und/oder Steuereinheit als Regeleinheit betrieben werden.

Insbesondere kann die Regel-und/oder Steuereinheit eingerichtet sein, an sie übermittelte Messwerte des/der Dehnungssensor(en) zur Regelung der mechanischen Beanspruchungseinheit zu verwenden.

Dadurch lässt sich die Zeit zur Untersuchung von Leistungseigenschaften der Fuge wie Grenzbelastungen als auch die Zeit zur Untersuchung von Alterungs- sowie Ermüdungsverhaltens von Fugen im Versuchsstand weiter reduzieren.

Die vorstehend beschriebenen Ausführungsformen können beliebig miteinander kombiniert werden.

Weitere vorteilhafte Ausgestaltungen, Einzelheiten, Aspekte und Merkmale der vorliegenden Erfindung ergeben sich aus den Unteransprüchen, der Beschreibung sowie den beigefügten Zeichnungen. Darin zeigt:
Fig. 1 eine schematische Darstellung eines Fugenversuchsstands gemäß einem Ausführungsbeispiel;
Fig. 2A eine perspektivische Ansicht eines Probekörper gemäß einem Ausführungsbeispiel;
Fig. 2B einen Ausschnitt des Fig. 2A gezeigten Probekörper sowie die Vernetzung für eine Simulation einer mechanischen Belastung gemäß einem Ausführungsbeispiel;
Fig. 3 eine perspektivische Ansicht des in Fig. 2A dargestellten Probekörpers sowie eines Teils einer Probenkörperaufnahme einer mechanischen Beanspruchungseinheit gemäß einem Ausführungsbeispiel;
Fig. 4 eine perspektivische Ansicht einer mechanischen Beanspruchungseinheit gemäß einem Ausführungsbeispiel;
Fig. 5 eine perspektivische Ansicht einer mechanischen Beanspruchungseinheit gemäß einem Ausführungsbeispiel;
Fig. 6 eine perspektivische Ansicht einer mechanischen Beanspruchungseinheit gemäß einem Ausführungsbeispiel;
Fig. 7 eine perspektivische Ansicht einer mechanischen Beanspruchungseinheit gemäß einem Ausführungsbeispiel;
Fig. 8 eine perspektivische Ansicht eines Probekörper gemäß einem Ausführungsbeispiel; und
Fig. 9 eine perspektivische Ansicht einer mechanischen Beanspruchungseinheit gemäß einem Ausführungsbeispiel.

In den Figuren bezeichnen gleiche Bezugszeichen sowie dreistellige Bezugszeichen, deren zweite Stelle und dritte Stelle jeweils übereinstimmen, typischerweise entsprechend ähnliche Teile oder Elemente. Beispielsweise kann ein in einer Figur mit einem Bezugszeichen 230 versehenes Teil einem gleichen oder ähnlichen Teil in einer anderen Figur mit einem Bezugszeichen 130 entsprechen.

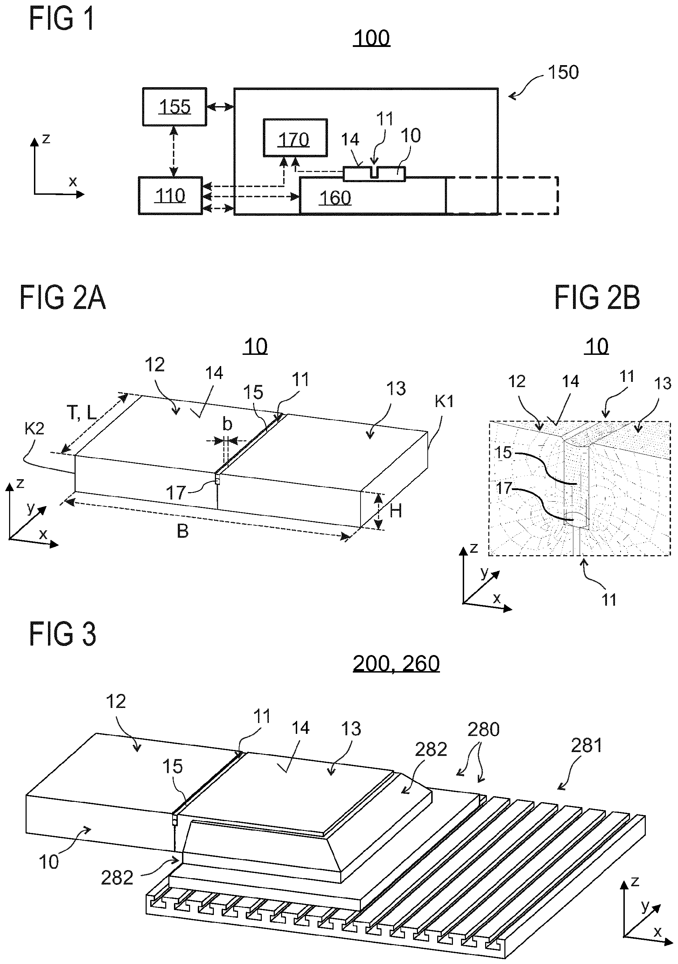

Fig. 1 zeigt eine schematische Darstellung eines Fugenversuchsstands 100. Ein Probekörper 10 wird von einer mechanischen Beanspruchungseinheit 160 in einer Bewitterungskammer 150 so gehalten, dass der Probekörper 10 verschiedenen Bewitterungsprofilen ausgesetzt werden kann. Gleichzeitig kann der Probekörper 10, bei dem es sich typischerweise um einen Systemprobekörper handelt, durch die mechanische Belastungseinheit 160 definierten Querkräften ausgesetzt werden.

Dabei kann der Probekörper 10 mittels der mechanischen Beanspruchungseinheit 160 in zumindest zwei, zueinander nicht parallelen Richtungen x, z mechanisch belastet werden.

Zur besseren Orientierung wird in den Figuren zusätzlich ein kartesisches Koordinatensystem (x, y, z) gezeigt, wobei die x-Richtung und die y-Richtung horizontale Richtungen darstellen und die z-Richtung eine vertikale Richtung darstellt.

Typischerweise ist die mechanische Beanspruchungseinheit 160 eingerichtet den Probekörper 10 in der x-Richtung und unabhängig davon und sogar gleichzeitig dazu in der z-Richtung zu belasten.

Die mechanische Beanspruchungseinheit 160 kann aber auch eingerichtet sein, den Probekörper 10 in allen drei Richtungen (x, y, z) unabhängig voneinander und sogar gleichzeitig mechanischen Zug-und/oder Druckbelastungen auszusetzen.

Wie durch das gestrichelte Rechteck in Figur 1 angedeutet wird, kann sich ein Teil der Belastungseinheit 160 auch außerhalb der Bewitterungskammer 150, die im Folgenden auch als Klimakammer bezeichnet wird, befinden.

Die mechanische Belastungseinheit 160 wird durch eine mit der Belastungseinheit 160 verbundene Regel-und/oder Steuereinheit 110 gesteuert, typischerweise sogar geregelt.

In Figur 1 stellen die gestrichelten Pfeile mögliche Informationsflüsse und der durchgehende Pfeil zwischen der Bewitterungskammer 150 und einer damit verbundenen Medienver- und Entsorgungseinheit 155 mögliche Stoffflüsse dar.

Wie in Figur 1 weiterer dargestellt wird, ist die Regel-und/oder Steuereinheit 110 auch mit der Detektionseinheit 170 des Fugenversuchstands 100 verbunden.

Von der Detektionseinheit 170 ermittelte und an die Regel-und/oder Steuereinheit 110 übermittelte Messdaten können zur Steuerung oder sogar Regelung der Klimakammer 150 und der mechanischen Beanspruchungseinheit 160, die im Folgenden auch als mechanischen Belastungseinheit bezeichnet wird, verwendet werden.

Insbesondere können Messdaten von Dehnungssensoren zum Anpassen gewünschter mechanischer Belastungsprofile durch die Belastungseinheit 160 verwendet werden.

Außerdem ist die Regel-und/oder Steuereinheit 110 mit der Bewitterungskammer 150 und der Medienver- und Entsorgungseinheit 155 verbundenen, um zumindest die Deckfläche 14 des Probekörpers 10 und die sich von der Deckfläche 14 in den Probekörper 10 erstreckende Fuge 11 gesteuert thermischen (z.B. Temperaturen und Temperaturprofilen in einem Bereich von -20 °C oder sogar darunter bis +50 °C oder sogar darüber), physikalischen (z. B. Feuchtigkeit, Regen), chemischen (z.B. Tausalz, Salzlösungen, Diesel, Benzin, Ozon etc.) und/oder Strahlungsbelastung (insbesondere UV) auszusetzen.

Der Zu- und Abfluss von Medien in die Bewitterungskammer 150 kann aber auch von der Bewitterungskammer 150 selbst gesteuert oder sogar geregelt werden.

Während der Belastungen können normale Dehnungsprozesse als auch Alterungsprozesse der Fuge 11, wie zum Beispiel Rissbildungen, Undichtigkeit, Erosion der und Abbrüche Fuge 11 bzw. angrenzender Bereiche des Probekörpers 10 mittels der Detektionseinheit 170 verfolgt bzw. sogar evaluiert werden.

Fig. 2A zeigt eine perspektivische Ansicht des Probekörpers 10, der in der mit Bezug zur Figur 1 erläuterten Beanspruchungseinheit 160 fixiert werden kann.

In dem exemplarischen Ausführungsbeispiel ist der Probekörper 10 im Wesentlichen quaderförmig. Von der Oberseite 14 des Probekörpers 10 erstreckt sich bis zur Unterseite eine Fuge 11, dessen Längsachse in y-Richtung orientiert ist. Außerdem erstreckt sich die Fuge 11 in y-Richtung zwischen zwei Seitenflächen des Probekörpers 10, d.h. über die gesamte Tiefe T des Probekörpers 10. Damit ist der Probekörper 10 durch die Fuge 11 in zwei Teilkörper 12, 13 getrennt. Beispielsweise kann der Systemprobekörper 10 einem Fahrbahnausschnitt auf Betonbasis oder Asphaltbasis entsprechen.

Die Fugenlänge L der Fuge 11 ist an der Oberseite 14 zumindest um einen Faktor 25, typischer zumindest um einen Faktor 30 größer ist als die Fugenbreite b. Dies ermöglicht repräsentative Nachbildung einer realen Fahrbahn, bei der das Verhältnis L/b typischerweise deutlich größer als ein Faktor 100 ist, für die Belastungstests und damit entsprechend zulässige Aussagen über deren Verhalten unter komplexen Belastungen insbesondere Langzeitbelastung.

Als fahrbahnausschnittrepräsentierender Systemprobekörper 10 beträgt seine Höhe zumindest 15 cm, seine eine Breite B zumindest 30 cm und seine Tiefe T zumindest 50 cm. Größere Werte sind ebenfalls möglich, aber mit einem erhöhten Aufwand verbunden, ohne zu einer signifikanten Erhöhung der Aussagekraft der Belastungstests für das reale System (Fahrbahn) zu führen.

Wie in Figur 2A dargestellt wird, ist der Probekörper 10 abgesehen von der Fuge 11 typischerweise ein gerader Zylinder (wobei unter einem Zylinder ein Körper mit einem Zylindermantel verstanden werden soll, wie er in der Mathematik definiert ist), noch typischer ein gerader Zylinder mit polygonaler Grund-und Deckfläche 14 (Unterseite Oberseite 14, d.h. ein gerades Prisma), und sogar noch typischer ein flacher gerader Zylinder mit polygonaler Grund-und Deckfläche 14, dessen Höhe H (Länge vertikaler Kanten K1, K2) höchstens der Hälfte seiner Tiefe T bzw. Breite B (Länge horizontaler Kanten) entspricht, bspw. ein flacher Quader.

Die Fugenbreite b kann bei fahrbahnausschnittrepräsentierenden Systemprobekörpern in einem Bereich von etwa 8 mm bis einige 10 mm liegen.

In dem exemplarischen Ausführungsbeispiel ist ein oberer Abschnitt der Fuge 11 mit einem Fugenfüllstoff 15 aus Bitumen, Asphalt oder Silikon oder einem anderen abdichtenden (und mechanische Spannungen aufnehmenden) Füllstoff oder einem Fugenfüllprofil, das im Folgenden auch als Füllprofil bezeichnet wird, gefüllt. Bei dem Fugenfüllprofil kann es sich bspw. um ein vorgefertigtes, Fugenprofil handeln, beispielsweise um ein Tannenbaumprofil oder ein Rundprofil, das unter Aktivierung von Rückstellkräften in die Fuge 11 eingepresst werden kann. Das Fugenfüllprofil kann zudem auch als komplexes Fugenfüllsystem ausgebildet sein, z.B. bei Fahrbahnübergängen, und beispielsweise Federn und/oder Platten enthalten.

Wie detaillierter in Figur 2B dargestellt wird, kann sich die Fuge 11 nach unten in x-Richtung abschnittsweise verjüngen. Außerdem kann unterhalb des Fugenfüllstoffes 15 ein Unterfüllstoff (Unterfüllprofil) 17 in der Fuge 11 gebildet sein. Der Unterfüllstoff kann von einem in die Fuge eingefüllten, erstarrten (erkalteten oder ausgehärteten) Stoff gebildet werden, z.B. einem Silikon oder einem Polyethylenschaum.

Die in Figur 2B zusätzlich dargestellten Linien (Gitternetzlinien) repräsentieren eine exemplarische Vernetzung (Meshing) für die numerische Simulation der mechanischen Belastung des Probekörpers 10 mit dem Ziel der Validierung der geeigneten Probekörpergeometrie(n).

In den durchgeführten numerischen Simulationen wurde das Verhältnis L/b von Fugenlänge L zur Fugenbreite b an der Oberseite 14 der Fuge 11 variiert. Dabei hat sich herausgestellt, dass L/b zumindest 25, besser sogar zumindest 30 oder sogar 33 betragen sollte. Dadurch kann sichergestellt werden, dass die mechanische Spannung in der Fuge 11 zumindest im Wesentlichen den einer deutlich längeren (realen) Fuge (L/b>100) entsprechen.

Werden die Belastungsversuche mit einem derartigen Systemprobekörper 10 durchgeführt, kann mit hoher Sicherheit davon ausgegangen werden, dass Belastungen im Versuch repräsentativ für das (reale) abzubildende Fugensystem sind.

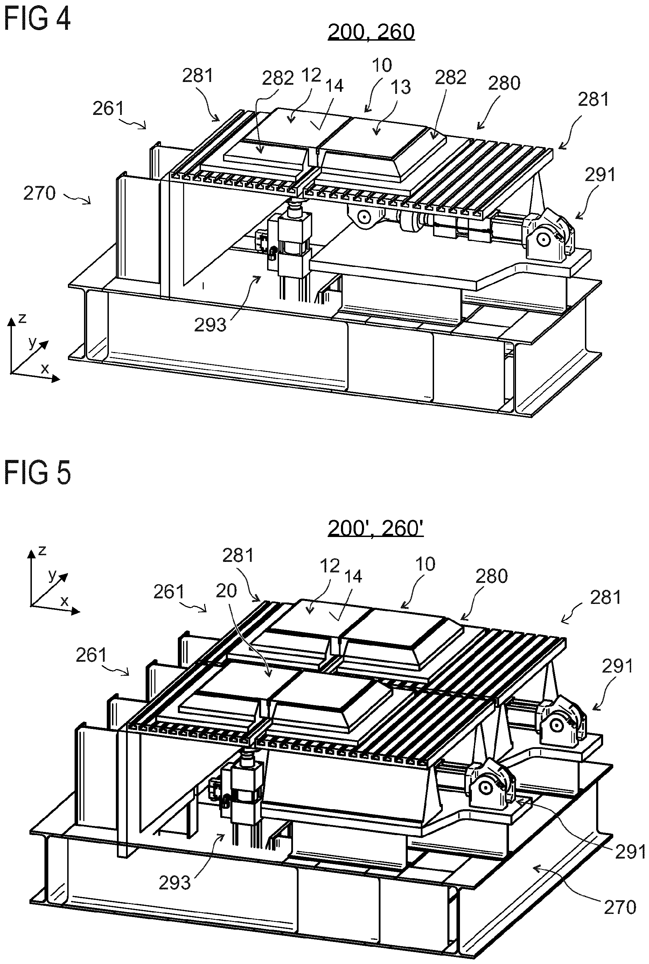

Fig. 3 zeigt eine perspektivische Ansicht des in Fig. 2A dargestellten Probekörpers 10 sowie einen rechten Teil einer Probenkörperaufnahme 280 (im Folgenden verkürzend auch als Aufnahme bezeichnet) einer den Probekörper 10 aufnehmenden mechanischen Beanspruchungseinheit 260 eines Fugenversuchsstand 200, der detaillierter in Figur 4 dargestellt ist. Typischerweise ist der Fugenversuchsstand 200 ähnlich zu dem oben mit Bezug zur Figur 1 erläuterten Fugenversuchsstand 100. Aus Gründen der Übersichtlichkeit wird in den Figuren 3-7 und 9 jedoch nur die jeweilige mechanische Beanspruchungseinheit detailliert dargestellt.

Die Probenkörperaufnahme 280 hat zwei Aufspannplatten 281 (von denen in Figur 3 aus Gründen der Übersichtlichkeit nur eine dargestellt ist).

Im unbelasteten Zustand sind beiden Aufspannplatten 281 typischerweise koplanar zueinander.

In dem exemplarischen Ausführungsbeispiel ist auf jeder der zwei Aufspannplatten 281 eine Halterung 282 für einen jeweiligen Teilkörper 12, 13 des Probekörpers 10 befestigt.

Typischerweise umschließt die Halterung 282 den jeweiligen Teilkörper 12, 13 zumindest teilweise von unten sowie von drei Seitenflächen, typischerweise formschlüssig.

Es ist aber auch möglich, dass die Halterung 282 nur aus einer Grundplatte besteht, wobei der Probekörper 10 bzw. der jeweilige Teilkörper 12, 13 mit der Grundplatte fest verbunden, zum Beispiel verschraubt ist.

In dem exemplarischen Ausführungsbeispiel von Figur 4 ist jede der Aufspannplatten 281 über einen jeweiligen Linearantrieb 291, 293 mit einem Rahmen 270 der Beanspruchungseinheit 260 verbunden.

Während eine der Aufspannplatten 281 (die linke in Figur 4) über den Linearantrieb 293 in z-Richtung gegenüber dem Rahmen 270 bewegt werden kann, kann die andere Aufspannplatte 281 (die rechte in Figur 4) über den Linearantrieb 291 in x-Richtung gegenüber dem Rahmen 270 bewegt werden.

Auf diese Weise kann der in der Probenkörperhalterung 280 fixierte Probenkörper 10 unabhängig voneinander und sogar gleichzeitig in die x-Richtung und in die z-Richtung mechanisch belastet werden.

Wie in Figur 5 dargestellt wird, können mehrere der in Figur 4 dargestellten Belastungsmodule 261 zu einer Beanspruchungseinheit 260' eines Fugenversuchsstands 200'kombiniert werden, die eine gleichzeitige mechanische Belastung mehrerer Probekörper 10, 20 gestattet.

Während die beiden Probekörper 10, 20 in Fugenversuchsstand 200` typischerweise gleichen klimatischen Belastungsprofilen ausgesetzt werden, können die Probekörper 10, 20 gleichen mechanischen Belastungsprofilen oder voneinander verschiedenen mechanischen Belastungsprofilen als auch gleichen chemischen Belastungsprofilen oder voneinander verschiedenen chemischen Belastungsprofilen ausgesetzt werden.

Außerdem kann vorgesehen sein, mittels einer nicht dargestellten Regeleinheit des Fugenversuchsstands 200` das jeweils verwendete mechanische Belastungsprofil in Abhängigkeit von Sensormessdaten anzupassen.

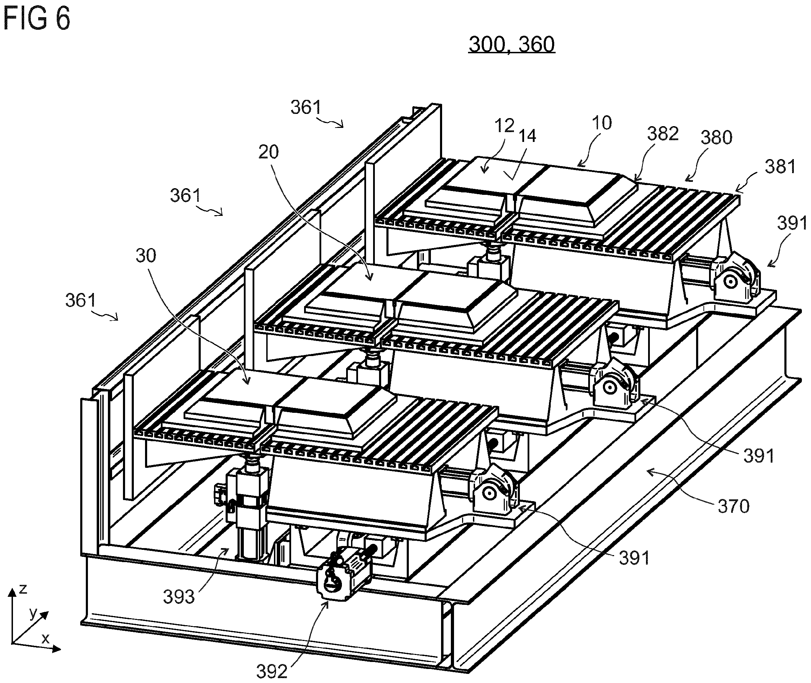

Fig. 6 zeigt eine perspektivische Ansicht einer mechanischen Beanspruchungseinheit 360 eines Fugenversuchsstands 300. Der Fugenversuchsstand 300 ist ähnlich zum oben mit Bezug zur Figur 5 erläuterten Fugenversuchsstand 200`. Jedoch besteht der Fugenversuchsstand 300 aus drei exemplarischen Belastungsmodulen 361, wobei jedes der Belastungsmodule 361 eingerichtet ist, den jeweiligen Probekörper 10, 20, 30 auch in y-Richtung (und damit in drei zueinander orthogonal Richtungen) mechanisch zu belasten.

In dem exemplarischen Ausführungsbeispiel kann über jeweils einen Linearantrieb 392 für die y-Richtung pro Modul 361, der unterhalb des jeweiligen Linearantriebs 391 für die x-Richtung angeordnet sein kann, der jeweilige Linearantrieb 391 und damit die in Figur 6 jeweils rechts angeordnete Probenkörperhalterung 380 gegenüber der jeweiligen in Figur 6 links angeordneten Probenkörperhalterung 380 des entsprechenden Moduls 361 in y-Richtung verschoben werden.

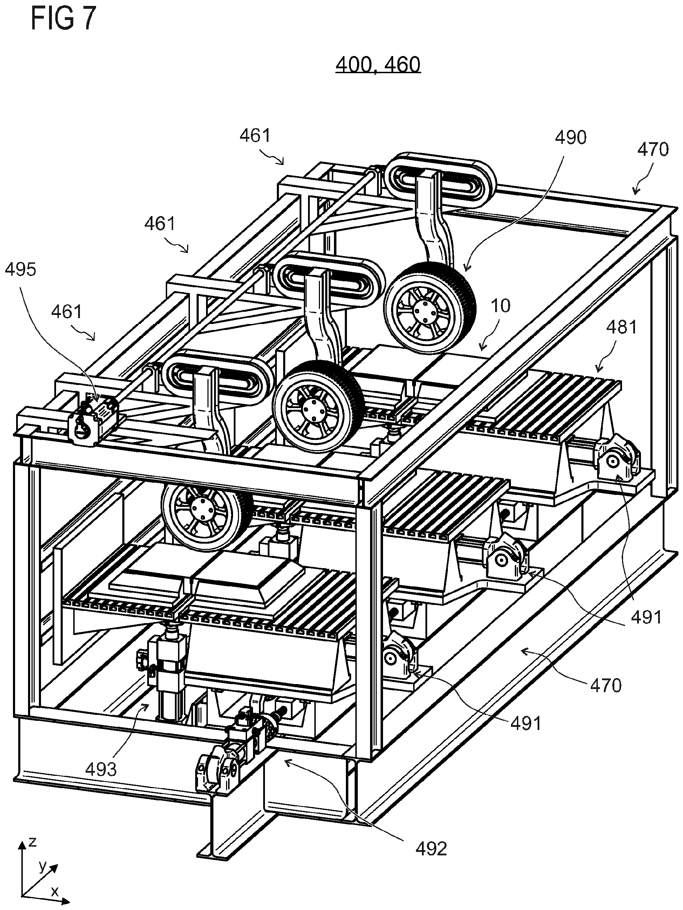

Fig. 7 zeigt eine perspektivische Ansicht einer mechanischen Beanspruchungseinheit 460 eines Fugenversuchsstands 400. Der Fugenversuchsstand 400 ist ähnlich zum oben mit Bezug zur Figur 6 erläuterten Fugenversuchsstand 300. Jedoch weist jedes der Belastungsmodule 461 der mechanischen Beanspruchungseinheit 460 ein typischerweise bereiftes Rad 490 auf, dass auf den vom Belastungsmodul jeweils gehaltenen Probekörper 10 abgesenkt werden kann. Insbesondere können die Räder 490 auf einer jeweiligen Fuge angeordnet bzw. abgesenkt werden.

Wie in Figur 7 dargestellt ist, können die Rotationsachsen der Räder 490 jeweils in y-Richtung und/oder parallel zur Längsrichtung der Fugen orientiert sein.

In dem exemplarischen Ausführungsbeispiel können die Probekörper 10 durch die Räder 490 somit in x-Richtung und in z-Richtung belastet werden.

Insbesondere kann vorgesehen sein, die auf den jeweiligen Probekörper 10 aufgesetzten Räder mit unterschiedlichen Geschwindigkeiten, Geschwindigkeitsprofilen sowie Beschleunigungen zu betreiben.

Außerdem kann vorgesehen sein, dass eine auf das Rad bzw. die Räder aufgebrachte vertikale Last gesteuert oder sogar geregelt werden kann. Insbesondere kann vorgesehen sein, die vertikale Last die über ein jeweiliges Rad auf den Probekörper ausgeübt wird entsprechend einem anteiligen Gewicht eines oder sogar mehrerer Fahrzeuge einzustellen bzw. gemäß einem zeitlichen Profil, das einer typischen Fahrzeugbelastung entspricht, zu variieren.

Wie bereits oben erwähnt wurde, können Belastungen von Fahrbahnfugen durch Fahrzeuge, insbesondere deren Rollbeanspruchung im Versuchsstand noch realistischer mittels rotierender Räder beziehungsweise Reifen 490 nachgebildet werden.

In dem exemplarischen Ausführungsbeispiel können die Räder 490 über einen gemeinsamen Elektromotor 495 angetrieben werden.

Es kann aber auch vorgeben, dass die Räder einzelnen antreibar sind.

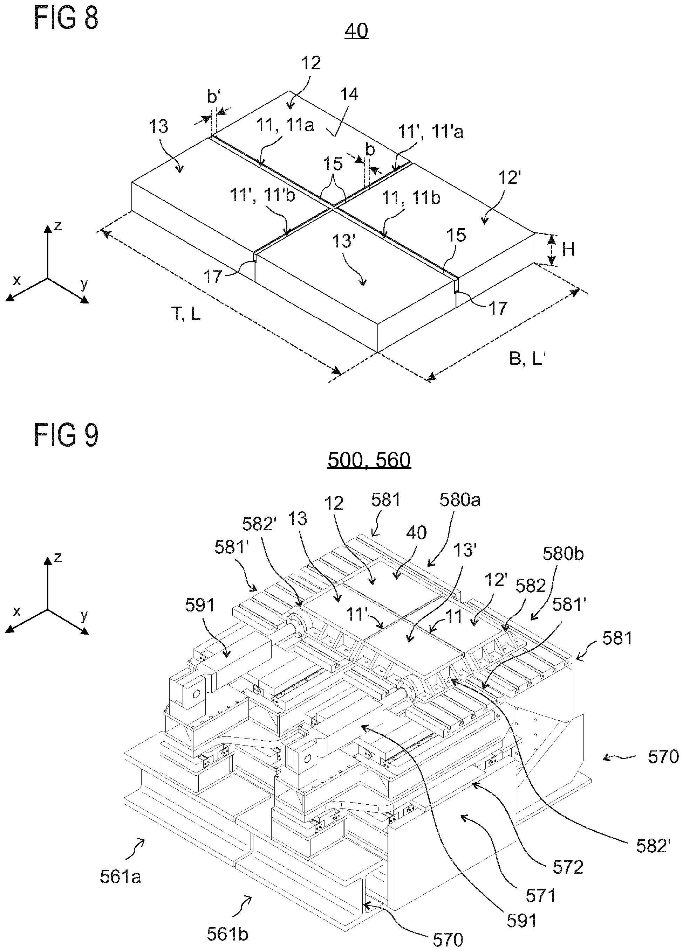

Fig. 8 zeigt eine perspektivische Ansicht eines im Wesentlichen quaderförmigen Probekörpers 40, der ähnlich zum oben mit Bezug zu den Figuren 2A, 2B erläuterten Probekörper 10 ist, aber vier Teilkörper 12, 13, 12', 13' aufweist, die durch Abschnitte 11a, 11b, 11a', 11b' zweier sich kreuzende Fugen 11, 11' paarweise voneinander beabstandet sind.

Beispielsweise kann der Probekörper 40 als Systemprobekörper ausgeführt sein und/oder einem Fahrbahnausschnitt auf Betonbasis oder Asphaltbasis in einem Kreuzungsbereich entsprechen.

Als fahrbahnausschnittrepräsentierender Systemprobekörper 40 beträgt seine Höhe H typischerweise zumindest 15 cm, seine eine Breite B typischerweise zumindest 30 cm und seine Tiefe T zumindest 50 cm oder sogar zumindest 100 cm. Größere Werte sind ebenfalls möglich, aber mit einem erhöhten Aufwand verbunden, ohne zu einer signifikanten Erhöhung der Aussagekraft der Belastungstests für das reale System (Fahrbahn) zu führen.

In dem exemplarischen Ausführungsbeispiel kreuzen sich die geraden Fugen 11, 11' in einem Winkel von 90'.

Beide Fugen 11, 11' erstrecken sich von der Oberseite 14 bis zur Unterseite des Probekörpers 40.

Außerdem erstreckt sich die Fuge 11 in y-Richtung und die Fuge 11' in x-Richtung zwischen zwei jeweiligen gegenüberliegenden Seitenflächen des Probekörpers 40, d.h. über die gesamte Tiefe T bzw. Breite B des Probekörpers 40. Damit ist der Probekörper 40 durch die Fugen 11, 11' in vier Teilkörper 12, 13, 12', 13' getrennt.

Typischerweise sind die Fugenlängen L, L` der beiden Fugen 11, 11' sogar an der Oberseite 14 jeweils zumindest um einen Faktor 25, typischer zumindest um einen Faktor 30 größer ist als die jeweilige Fugenbreite b, b'.

Dies ermöglicht eine repräsentative Nachbildung einer realen Fahrbahn, bei der typischerweise beide Verhältnisse L/b und L'/b' größer oder sogar deutlich größer als ein Faktor 100 sind, für die Belastungstests und damit entsprechend zulässige Aussagen über deren Verhalten unter komplexen Belastungen insbesondere Langzeitbelastung.

Auch ist die Geometrie der Fugen 11, 11' in Querschnitten, die senkrecht zur jeweiligen Längsachse der Fugen 11, 11' (Erstreckungsrichtung y bzw. x der Fugen 11, 11' in Aufsicht von oben auf die Oberseite 14 des Probekörpers 40) sind und zwei angrenzende Teilkörper schneiden, typischerweise gleich. Insbesondere können die Breiten b, b' der Fugen 11, 11' zumindest an der die Oberseite 14 gleich groß sein.

Außerdem kann der Aufbau der Fugen 11, 11' zumindest im Wesentlichen dem insbesondere mit Bezug zur Fig. 2B erläuterten Aufbau der Fuge 11 des Probekörpers 10 entsprechen.

Der Probekörper 40 kann mit entsprechenden Anpassungen der Aufnahmen in einer der oben mit Bezug zu den Figuren 5 bis 7 erläuterten modularen mechanischen Beanspruchungseinheiten 260', 360 und/oder 460 fixiert werden.

Insbesondere kann der Probekörper 40 in angepassten Aufnahmen zweier benachbarter mechanischer Belastungsmodule 261, 361, bzw. 461 fixiert werden, wobei ggf. der typischerweise einstellbare Abstand der benachbarten mechanischen Beanspruchungseinheiten 260', 360 bzw. 460 in y-Richtung angepasst (verringert) wird.

Mit Bezug zur Figur 9 wird eine Beanspruchungseinheit 560 eines Fugenversuchsstands 500 erläutert, der besonders gut für Belastungstest von Probekörpern mit zwei sich kreuzenden Fugen geeignet ist.

Der Fugenversuchsstand 500 ist ähnlich zum oben mit Bezug zu den Figuren 5 bis 7 erläuterten modular aufgebauten Fugenversuchsständen 200', 300, 400. Jedoch wird die Probenkörperaufnahme 580a, 580b anteilig (z.B. hälftig) von den beiden mechanischen Belastungsmodulen 561a, 561b der mechanischen Beanspruchungseinheit 560 bereitgestellt, die ansonsten ähnlich wie die Belastungsmodulen 261, 361 ausgeführt sein können.

Die Probenkörperaufnahme 580 hat vier Aufspannplatten 581, 581', die im unbelasteten Zustand typischerweise koplanar zueinander sind. Jedes der beiden Belastungsmodulen 561a, 561b stellt zwei der vier Aufspannplatten 581, 581' bereit.

In dem exemplarischen Ausführungsbeispiel ist auf jeder der vier Aufspannplatten 581, 581' eine Halterung 582, 582' für einen jeweiligen Teilkörper 12, 13, 12', 13' des Probekörpers 40 befestigt.

Typischerweise umschließen die Halterungen 582, 582' einen jeweiligen Teilkörper 12, 13, 12', 13 zumindest teilweise von unten sowie zumindest teilweise von zwei Seitenflächen, typischerweise formschlüssig.

In dem exemplarischen Ausführungsbeispiel von Figur 9 sind die Aufspannplatten 581' der Belastungsmodule 561a, 561b über einen jeweiligen Linearantrieb 591 mit einem Rahmen 570 der Beanspruchungseinheit 560 verbunden.

Mittels der Lineareantriebe 591 kann die Fuge 11 in (positiver und negativer) x-Richtung mechanischen Belastungen (Belastungsprofilen) ausgesetzt werden.

Wie in Fig. 9 dargestellt ist, kann vorgesehen sein, die Lineareantriebe 591 mit einer jeweiligen Halterung 582' zu verbinden, typischerweise zu verschrauben.

Die Lineareantriebe der Belastungsmodulen 561a, 561b für die y- und z-Richtung sind in Fig. 9 nicht dargestellt (verdeckt).

Anhand von Überlegungen und umfangreicher Untersuchungen konnten die Autoren der vorliegenden Schrift ermitteln, dass aussagekräftige Fugenbelastungsuntersuchungen für Probekörper 40 mit zwei sich kreuzenden Fugen 11, 11' auch mit nur 4 Linearantrieben durchgeführt werden können.

In einer exemplarischen Anordnung ist dafür zusätzlich zu den beiden Lineareantrieben 591 für die x-Richtung ein Linearantrieb für z-Richtung mit der Aufspannplatte 581' des Belastungsmoduls 561b verbunden und ein Linearantrieb für die y-Richtung mit den in y-Richtung gegeneinander fixierten Aufspannplatten 581, 581'des Belastungsmoduls 561a verbunden, wobei zudem die Bewegung der Aufspannplatte 581' des Belastungsmoduls 561a in y-Richtung blockiert ist (über die Platten 571 und 572).

Insbesondere kann der Linearantrieb für die y-Richtung an der Platte 571 des Rahmens 570 befestigt und/oder der Linearantrieb für z-Richtung unterhalb der Aufspannplatte 581' des Belastungsmoduls 561b angeordnet sein.

In der beschriebenen exemplarischen Anordnung sind die beiden Teilkörper 12` und 13 (die Aufspannplatte 581' des Belastungsmoduls 561a und die Aufspannplatte 581 des Belastungsmoduls 561b) mittels der Linearantriebe in allen drei Richtungen x, y, z (unabhängig voneinander) relativ zueinander bewegbar (und damit die Fugen 11, 11' des Probekörpers 40). Dies ermöglicht eine gute Nachbildung realer mechanischer Belastungsverhältnisse - profile von Fugen in Fahrbahnkreuzungsbereichen.

Es ist aber auch möglich zwei Linearantriebe für die y-Richtung und/oder zwei Linearantriebe für die z-Richtung vorzusehen.

Weiterhin kann die die mechanische Beanspruchungseinheit 560 mehrere Paare von Belastungsmodulen 561a, 561b aufweisen.

Außerdem kann die mechanische Beanspruchungseinheit 560 zusätzlich eine (jeweilige) Rollbeanspruchungseinheit mit einem auf den Probekörper absetzbaren und motorisch antreibbaren Rad aufweisen, wie sie oben mit Bezug zur Fig. 7 erläutert wurde.

Gemäß einer Ausführungsform umfasst ein Fugenversuchsstand, insbesondere ein Dehnfugenversuchsstand eine Bewitterungskammer, eine mechanische Beanspruchungseinheit, und einen in der mechanischen Beanspruchungseinheit fixierten und in der Bewitterungskammer angeordneten Probekörper. Der typischerweise als Systemkörper ausgeführte Probekörper weist eine Fuge mit einer Fugenbreite und einer Fugenlänge auf, die zumindest um einen Faktor 25, typischer zumindest um einen Faktor 30, noch typischer zumindest um einen Faktor 33 größer ist als die Fugenbreite. Der Probekörper kann mittels der mechanischen Beanspruchungseinheit in zumindest einer, typischerweise in zumindest zwei zueinander nicht parallelen Richtungen, noch typischer in drei zueinander nicht parallelen Richtungen (typischerweise zeitabhängigen) mechanischen Kräften von bis zumindest 50 kN oder sogar zumindest 100 kN ausgesetzt werden.

Die mechanische Beanspruchungseinheit ist typischerweise modular aufgebaut.

Insbesondere kann die Beanspruchungseinheit mehrere mechanische Belastungsmodule aufweisen.

Jedes der mechanischen Belastungsmodule weist typischerweise zwei Aufspannplatten und mindestens einen Linearantrieb zum Bewegen der zwei Aufspannplatten und/oder von an den zwei Aufspannplatten jeweils befestigten Halterungen für Teilkörper des Probekörpers gegeneinander auf.

Typischerweise weist der Fugenversuchsstand ein auf dem Probekörper anordenbares oder angeordnetes, typischerweise bereiftes Rad und einen mit dem Rad verbundenen Antriebsmotor auf.

Die vorliegende Erfindung wurde anhand von Ausführungsbeispielen erläutert. Diese Ausführungsbeispiele sollten keinesfalls als einschränkend für die vorliegende Erfindung verstanden werden. Die nachfolgenden Ansprüche stellen einen ersten, nicht bindenden Versuch dar, die Erfindung allgemein zu definieren.

## Patentansprüche

1. Fugenversuchsstand (100 - 500), umfassend:
- eine Bewitterungskammer (150);
- eine mechanische Beanspruchungseinheit (160, 260, 260` 360, 460, 560); und
- einen von der mechanischen Beanspruchungseinheit (160, 260, 260` 360, 460, 560) gehaltenen und in der Bewitterungskammer (150) angeordneten Probekörper (10 - 40) aufweisend eine Fuge (11) mit einer Fugenbreite (b) und einer Fugenlänge (L, L'), die zumindest um einen Faktor 25 größer ist als die Fugenbreite (b, b'), wobei der Probekörper (10 - 40) mittels der mechanischen Beanspruchungseinheit (160, 260, 260` 360, 460, 560) in zumindest zwei, zueinander nicht parallelen Richtungen (x, y, z) mechanisch belastbar ist, wobei die mechanische Beanspruchungseinheit (160, 260, 260` 360, 460, 560) für jede der zumindest zwei, zueinander nicht parallelen Richtungen (x, y, z) einen jeweiligen Linearantrieb (291, 292, 293, 391, 392, 393, 491, 492, 493) aufweist.

2. Fugenversuchsstand (100 - 500) nach Anspruch 1, wobei die Fugenlänge (L, L') zumindest um einen Faktor 30 größer ist als die Fugenbreite (b, b').

3. Fugenversuchsstand (100 - 500) nach Anspruch 1 oder 2, wobei der Probekörper (10, 20, 30, 40) ein Systemprobekörper ist, wobei der Probekörper mehrlagig, mehrschichtig und/oder mehrteilig ist, wobei die Fuge (11, 11') eine Dehnfuge ist, wobei die Fuge (11, 11') eine Raumfuge ist, wobei sich die Fuge (11, 11') von einer Deckfläche (14) des Probekörpers (10, 20, 30) bis zu einer Grundfläche des Probekörpers (10, 20, 30, 40) erstreckt, wobei sich die Fuge (11, 11') zwischen zwei einander gegenüberliegenden Seitenflächen des Probekörpers (10, 20, 30, 40) erstreckt, wobei der Probekörper (10, 20, 30, 40) zwei durch die Fuge (11, 11') voneinander beabstandete Teilkörper (12, 13, 12', 13') aufweist, wobei ein oberer Abschnitt der Fuge (11, 11') gefüllt ist, wobei die Fuge (11, 11') zumindest teilweise gefüllt ist, wobei die Fuge (11, 11') zumindest teilweise mit einem Füllmaterial oder einem Füllsystem gefüllt ist, das die zwei Teilkörper (12, 13, 12', 13') miteinander verbindet, wobei die Fugenlänge (L, L') und die Fugenbreite (b, b') jeweiligen größten Ausdehnungen der Fuge (11, 11') in zwei zueinander orthogonalen Richtungen (x, y) entsprechen, wobei sich die Fuge (11, 11') in einer zu den zwei zueinander orthogonalen Richtungen (x, y) senkrechten dritten Richtung (-z) zumindest abschnittsweise verjüngt, wobei in der Fuge (11, 11') ein Füllstoff und/oder ein Füllprofil (15) angeordnet ist, wobei in der Fuge (11, 11') ein Unterfüllprofil (17), insbesondere ein PE-Schaumprofil (17) angeordnet ist, wobei der Probekörper (10, 20, 30, 40) und/oder zumindest einer der Teilkörper (12, 13, 12', 13') Glas, Stahl, Aluminium, ein Kunststoff, Asphalt, insbesondere ein Sonderasphalt, Beton, insbesondere ein Sonderbeton, oder einen Fahrbahndeckenbeton aufweist, wobei der Probekörper (10, 20, 30, 40) im Aufbau einer Fahrbahndecke entspricht, wobei der Probekörper (10, 20, 30, 40) im Aufbau einer Fugenausbildung in Ingenieurbauwerken des Straßenbaus und/oder Tiefbaus entspricht, wobei der Probekörper (10, 20, 30, 40) im Aufbau einer Fugenausbildung in Ingenieurbauwerken des Hoch- und/oder Fassadenbaus entspricht, wobei der Probekörper (10, 20, 30, 40) abgesehen von der Fuge (11, 11') quaderförmig ist, wobei der Probekörper (10, 20, 30, 40) eine Höhe (H) von zumindest 15 cm, eine Breite (B) von zumindest 30 cm oder sogar zumindest 50 cm und/oder eine Tiefe (T) von zumindest 50 cm oder sogar zumindest 100 cm aufweist, wobei der Probekörper (40) zwei sich kreuzende Fugen (11, 11') aufweist, und/oder wobei der Probekörper (40) vier durch die zwei sich kreuzenden Fugen (11, 11') voneinander beabstandete Teilkörper (12, 13, 12', 13') aufweist.

4. Fugenversuchsstand (100 - 500) nach einem der vorangehenden Ansprüche, wobei in der Fuge (11) ein kinematisches Hilfssystem angeordnet ist.

5. Fugenversuchsstand (100 - 500) nach einem der vorangehenden Ansprüche, wobei der Probekörper (10 - 40) mittels der mechanischen Beanspruchungseinheit in drei, zueinander nicht parallelen, typischerweise zueinander orthogonalen Richtungen (x, y, z) mechanisch belastbar ist, wobei die mechanische Beanspruchungseinheit eingerichtet ist, diagonal gegenüberliegende Kanten (K1, K2) des Probekörpers (10, 20, 30, 40) und/oder gegenüberliegende Fugenflanken mit bis zu zumindest 3 Hz, bis zu zumindest 8 Hz oder sogar bis zu zumindest 20 Hz in jeder der zumindest zwei, zueinander nicht parallelen Richtungen (x, y, z) um bis zu +/- 2 mm gegeneinander zu verschieben, wobei die mechanische Beanspruchungseinheit eingerichtet ist, diagonal gegenüberliegende Kanten (K1, K2) des Probekörpers (10, 20, 30, 40) und/oder gegenüberliegende Fugenflanken mit bis zu zumindest 3 Hz, bis zu zumindest 8 Hz oder sogar bis zu zumindest 20 Hz in einer vertikalen Richtung (z) um bis zu +/- 5 mm gegeneinander zu verschieben, wobei die mechanische Beanspruchungseinheit eingerichtet ist, den Probekörper (10, 20, 30, 40) unabhängig voneinander in die zwei, zueinander nicht parallelen Richtungen (x, y, z) mechanisch zu belasten, wobei die mechanischen Beanspruchungseinheit modular aufgebaut ist, wobei die mechanische Beanspruchungseinheit eingerichtet ist, mehrere Probekörper (10, 20, 30, 40) gleichzeitig in den zumindest zwei, zueinander nicht parallelen Richtungen (x, y, z) mechanisch zu belasten, wobei die mechanische Beanspruchungseinheit (160, 260, 260` 360, 460, 560) eingerichtet ist, den Probekörper (10, 20, 30, 40) Zugspanngen und Druckspannungen auszusetzen, wobei die mechanische Beanspruchungseinheit (160, 260, 260` 360, 460, 560) eingerichtet ist, den Probekörper (10, 20, 30) in mindestens einer der zumindest zwei, zueinander nicht parallelen Richtungen (x, y, z) mit Kräften von zumindest 1 N oder zumindest 10 N und/oder von bis zu 150 kN oder sogar bis zu 250 kN zu belasten, und/oder wobei die mechanische Beanspruchungseinheit (160, 260, 260` 360, 460, 560) steuerbar oder sogar regelbar ist.

6. Fugenversuchsstand (100 - 500) nach einem der vorangehenden Ansprüche, wobei der jeweilige Linearantrieb (291, 292, 293, 391, 392, 393, 491, 492, 493) einen Motor, insbesondere einen Elektromotor, oder einen Zylinder sowie eine mit dem Zylinder fluidisch verbundene Hydraulikpumpe oder Pneumatikpumpe aufweist, und/oder wobei die mechanische Beanspruchungseinheit (160, 260, 260` 360, 460, 560) eine Rollbeanspruchungseinheit aufweisend ein auf den Probekörper (10, 20, 30, 40) absenkbares und/oder motorisch antreibbares Rad (490) aufweist.

7. Fugenversuchsstand (100 - 500) nach einem der vorangehenden Ansprüche, wobei die mechanische Beanspruchungseinheit (160, 260, 260` 360, 460, 560) eine Aufnahme (280, 281, 282, 380, 381, 382, 481, 580, 581, 582) aufweist, in der der Probekörper (10, 20, 30, 40) fixierbar ist.

8. Fugenversuchsstand (100 - 500) nach Anspruch 7, wobei die Aufnahme zwei Aufspannplatten (281, 381, 481, 581) aufweist, die in jede der zumindest zwei, zueinander nicht parallelen Richtungen (x, y, z) relativ zueinander bewegbar sind, typischerweise vier Aufspannplatten (281, 381, 481, 581) aufweist, die paarweise in mindestens einer der zumindest zwei, zueinander nicht parallelen Richtungen (x, y, z) relativ zueinander bewegbar sind, wobei auf jeder der Aufspannplatten (281, 381, 481, 581) eine an der jeweiligen Aufspannplatte (281, 381, 481, 581) befestigte Halterung (282, 382, 582) für einen jeweiligen Teilkörper (12, 13, 12', 13') des Probekörpers (10, 20, 30, 40) angeordnet ist.

9. Fugenversuchsstand (100 - 500) nach einem der vorangehenden Ansprüche, wobei die Bewitterungskammer (150) eine Bestrahlungseinheit, eine Temperiereinheit, einen Temperatursensor, eine Beregnungseinheit, eine Befeuchtungseinheit, eine chemische Belastungseinheit, einen Feuchtigkeitssensor, und/oder eine Begasungseinheit aufweist, und/oder wobei die Bewitterungskammer (150) Anschlüsse für eine Medienver- und/oder Entsorgungseinheit (155) aufweist.

10. Fugenversuchsstand (100 - 500) nach einem der vorangehenden Ansprüche, weiter umfassend eine typischerweise benachbart zu der Fuge (11, 11') angeordnete Detektionseinheit (170).

11. Fugenversuchsstand (100 - 500) nach Anspruch 10, wobei die Detektionseinheit (170) einen Kraftsensor für die Fuge (11), einen Dehnungssensor für die Fuge (11, 11') und/oder einen Dichtigkeitssensor für die Fuge aufweist.

12. Fugenversuchsstand (100 - 500) nach Anspruch 10 oder 11, wobei die Detektionseinheit (170) einen typischerweise unterhalb der Fuge (11, 11') angeordnete optischen Detektor, insbesondere eine Kamera umfasst, wobei die Detektionseinheit einen typischerweise unterhalb der Fuge (11, 11') angeordneten Flüssigkeitsdetektor, und/oder eine an der Fuge (11, 11') angeordnete Unterdrucksaugglocke aufweist.

13. Fugenversuchsstand (100 - 500) nach einem der vorangehenden Ansprüche, weiter umfassend eine Regel-und/oder Steuereinheit (110), die mit der mechanische Beanspruchungseinheit (160, 260, 260` 360, 460, 560), der Bewitterungskammer (150), der Detektionseinheit (170), der chemischen Belastungseinheit, und/oder der Medienver- und/oder Entsorgungseinheit (155) verbunden ist.

14. Fugenversuchsstand (100 - 500) nach Anspruch 13, wobei die Regel-und/oder Steuereinheit (110) eingerichtet ist, den Probekörper (10 - 30) mittels der mechanische Beanspruchungseinheit (160, 260, 260` 360, 460, 560) und der Bewitterungskammer (150) einem kombinierten mechanischen und klimatischen Belastungsprofil auszusetzen, und/oder wobei die Regel-und/oder Steuereinheit (110) eingerichtet ist, vom Dehnungssensor übermittelte Messwerte und/oder vom Kraftsensor übermittelte Messwerte zur Steuerung und/oder Regelung der mechanischen Beanspruchungseinheit (160, 260, 260` 360, 460, 560) zu verwenden.

15. Fugenversuchsstand (100 - 500) nach einem der Ansprüche 11 bis 14, weiter aufweisend eine mit dem Kraftsensor verbundene Auswerteeinheit, die eingerichtet ist, vom Kraftsensor übermittelte Messwerte anhand vorgegebener Kriterien zu bewerten und/oder auf einem Monitor auszugeben.

## Claims

1. Joint test bench (100-500), comprising:
- a weathering chamber (150);
- a mechanical stress unit (160, 260, 260', 360, 460, 560); and
- a specimen body (10-40) that is held by the mechanical stress unit (160, 260, 260', 360, 460, 560) and is arranged in the weathering chamber (150), comprising a joint (11) having a joint width (b) and a joint length (L, L') that is greater than the joint width (b, b') by at least a factor of 25, wherein the specimen body (10-40) can be mechanically loaded in at least two directions (x, y, z) that are not parallel to one another by means of the mechanical stress unit (160, 260, 260', 360, 460, 560), wherein the mechanical stress unit (160, 260, 260', 360, 460, 560) comprises a respective linear drive (291, 292, 293, 391, 392, 393, 491, 492, 493) for each of the at least two directions (x, y, z) that are not parallel to one another.

2. Joint test bench (100-500) according to claim 1, wherein the joint length (L, L') is greater than the joint width (b, b') by at least a factor of 30.

3. Joint test bench (100-500) according to claim 1 or 2, wherein the specimen body (10, 20, 30, 40) is a system specimen body, wherein the specimen body is multi-ply, multi-layered, and/or multipart, wherein the joint (11, 11') is an expansion joint, wherein the joint (11, 11') is a movement joint, wherein the joint (11, 11') extends from a top surface (14) of the specimen body (10, 20, 30) to a base surface of the specimen body (10, 20, 30, 40), wherein the joint (11, 11') extends between two side surfaces of the specimen body (10, 20, 30, 40) that are opposite one another, wherein the specimen body (10, 20, 30, 40) comprises two partial bodies (12, 13, 12', 13') spaced apart from one another by the joint (11, 11'), wherein an upper portion of the joint (11, 11') is filled, wherein the joint (11, 11') is at least partially filled, wherein the joint (11, 11') is at least partially filled with a filling material or a filling system which interconnects the two partial bodies (12, 13, 12', 13'), wherein the joint length (L, L') and the joint width (b, b') correspond to the respective greatest extents of the joint (11, 11') in two directions (x, y) that are orthogonal to one another, wherein the joint (11, 11') tapers at least in portions in a third direction (-z) that is perpendicular to the two directions (x, y) that are orthogonal to one another, wherein a filler and/or a filling profile (15) is arranged in the joint (11, 11'), wherein an underfilling profile (17), in particular a PE foam profile (17), is arranged in the joint (11, 11'), wherein the specimen body (10, 20, 30, 40) and/or at least one of the partial bodies (12, 13, 12', 13') comprises glass, steel, aluminum, a plastics material, asphalt, in particular a special asphalt, concrete, in particular a special concrete, or a road-paving concrete, wherein the specimen body (10, 20, 30, 40) corresponds in structure to road paving, wherein the specimen body (10, 20, 30, 40) corresponds in structure to joint formation in road construction and/or civil engineering, wherein the specimen body (10, 20, 30, 40) corresponds in structure to joint formation in structural engineering and/or facade construction, wherein, except for the joint (11, 11'), the specimen body (10, 20, 30, 40) is cuboid, wherein the specimen body (10, 20, 30, 40) has a height (H) of at least 15 cm, a width (B) of at least 30 cm or even at least 50 cm, and/or a depth (T) of at least 50 cm or even at least 100 cm, wherein the specimen body (40) comprises two intersecting joints (11, 11'), and/or wherein the specimen body (40) comprises four partial bodies (12, 13, 12', 13') spaced apart from one another by the two intersecting joints (11, 11').

4. Joint test bench (100-500) according to any one of the preceding claims, wherein a kinematic auxiliary system is arranged in the joint (11).

5. Joint test bench (100-500) according to any one of the preceding claims, wherein the specimen body (10-40) can be mechanically loaded in three directions (x, y, z) that are not parallel to one another and are typically orthogonal to one another by means of the mechanical stress unit, wherein the mechanical stress unit is configured to shift diagonally opposite edges (K1, K2) of the specimen body (10, 20, 30, 40) and/or opposite joint flanks relative to one another by up to +/- 2 mm at up to at least 3 Hz, up to at least 8 Hz, or even up to at least 20 Hz in each of the at least two directions (x, y, z) that are not parallel to one another, wherein the mechanical stress unit is configured to shift diagonally opposite edges (K1, K2) of the specimen body (10, 20, 30, 40) and/or opposite joint flanks relative to one another by up to +/- 5 mm at up to at least 3 Hz, up to at least 8 Hz, or even up to at least 20 Hz in a vertical direction (z), wherein the mechanical stress unit is configured to mechanically load the specimen body (10, 20, 30, 40) independently of one another in the two directions (x, y, z) that are not parallel to one another, wherein the mechanical stress unit has a modular construction, wherein the mechanical stress unit is configured to mechanically load a plurality of specimen bodies (10, 20, 30, 40) simultaneously in the at least two directions (x, y, z) that are not parallel to one another, wherein the mechanical stress unit (160, 260, 260', 360, 460, 560) is configured to expose the specimen body (10, 20, 30, 40) to tensile stresses and compressive stresses, wherein the mechanical stress unit (160, 260, 260', 360, 460, 560) is configured to load the specimen body (10, 20, 30) with forces of at least 1 N or at least 10 N and/or up to 150 kN or even up to 250 kN in at least one of the at least two directions (x, y, z) that are not parallel to one another, and/or wherein the mechanical stress unit (160, 260, 260', 360, 460, 560) can be controlled in an open-loop or even closed-loop manner.

6. Joint test bench (100-500) according to any one of the preceding claims, wherein the respective linear drive (291, 292, 293, 391, 392, 393, 491, 492, 493) comprises a motor, in particular an electric motor, or a cylinder and a hydraulic pump or pneumatic pump fluidically connected to the cylinder, and/or wherein the mechanical stress unit (160, 260, 260', 360, 460, 560) comprises a rolling stress unit comprising a wheel (490) that can be lowered onto the specimen body (10, 20, 30, 40) and/or can be driven by a motor.

7. Joint test bench (100-500) according to any one of the preceding claims, wherein the mechanical stress unit (160, 260, 260', 360, 460, 560) comprises a receptacle (280, 281, 282, 380, 381, 382, 481, 580, 581, 582) in which the specimen body (10, 20, 30, 40) can be fixed.

8. Joint test bench (100-500) according to claim 7, wherein the receptacle comprises two clamping plates (281, 381, 481, 581), which are movable relative to one another in each of the at least two directions (x, y, z) that are not parallel to one another, typically comprises four clamping plates (281, 381, 481, 581), which are movable relative to one another in pairs in at least one of the at least two directions (x, y, z) that are not parallel to one another, wherein a holder (282, 382, 582) fastened to the respective clamping plate (281, 381, 481, 581) for a respective partial body (12, 13, 12', 13') of the specimen body (10, 20, 30, 40) is arranged on each of the clamping plates (281, 381, 481, 581).

9. Joint test bench (100-500) according to any one of the preceding claims, wherein the weathering chamber (150) comprises an irradiation unit, a temperature-control unit, a temperature sensor, an irrigation unit, a humidification unit, a chemical loading unit, a humidity sensor, and/or a gassing unit, and/or wherein the weathering chamber (150) comprises ports for a media supply and/or removal unit (155).

10. Joint test bench (100-500) according to any one of the preceding claims, further comprising a detection unit (170) typically arranged adjacent to the joint (11, 11').

11. Joint test bench (100-500) according to claim 10, wherein the detection unit (170) comprises a force sensor for the joint (11), a strain sensor for the joint (11, 11'), and/or a seal-tightness sensor for the joint.

12. Joint test bench (100-500) according to claim 10 or 11, wherein the detection unit (170) comprises an optical detector, in particular a camera, that is typically arranged below the joint (11, 11'), wherein the detection unit comprises a liquid detector that is typically arranged below the joint (11, 1 1'), and/or wherein the detection unit comprises a vacuum suction cup arranged on the joint (11, 11').

13. Joint test bench (100-500) according to any one of the preceding claims, further comprising a closed-loop and/or open-loop control unit (110), which is connected to the mechanical stress unit (160, 260, 260', 360, 460, 560), the weathering chamber (150), the detection unit (170), the chemical loading unit, and/or the media supply and/or removal unit (155).

14. Joint test bench (100-500) according to claim 13, wherein the closed-loop and/or open-loop control unit (110) is configured to expose the specimen body (10-30) to a combined mechanical and climatic load profile by means of the mechanical stress unit (160, 260, 260', 360, 460, 560) and the weathering chamber (150), and/or wherein the closed-loop and/or open-loop control unit (110) is configured to use measurement values transmitted by the strain sensor and/or measurement values transmitted by the force sensor for the open-loop and/or closed-loop control of the mechanical stress unit (160, 260, 260', 360, 460, 560).

15. Joint test bench (100-500) according to any one of claims 11 to 14, further comprising an evaluation unit, which is connected to the force sensor and is configured to analyze measurement values transmitted by the force sensor on the basis of predetermined criteria and/or to output them on a monitor.

## Revendications

1. Banc d'essai de joints d'étanchéité (100 - 500) comprenant :
- une chambre climatique (150) ;
- une unité de sollicitation mécanique (160, 260, 260', 360, 460, 560) ; et
- un corps d'échantillon (10 - 40) maintenu par l'unité de sollicitation mécanique (160, 260, 260', 360, 460, 560) et disposé dans la chambre climatique (150), comprenant un joint d'étanchéité (11) avec une largeur de joint d'étanchéité (b) et une longueur de joint d'étanchéité (L, L'), qui est supérieure d'au moins un facteur 25 à la largeur de joint d'étanchéité (b, b'), dans lequel le corps d'échantillon (10 - 40) peut être sollicité mécaniquement au moyen de l'unité de sollicitation mécanique (160, 260, 260', 360, 460, 560) dans au moins deux directions (x, y, z) non parallèles entre elles, dans lequel l'unité de sollicitation mécanique (160, 260, 260', 360, 460, 560) comprend, pour chacune des au moins deux directions (x, y, z) non parallèles entre elles, un dispositif d'entraînement linéaire respectif (291, 292, 293, 391, 392, 393, 491, 492, 493).

2. Banc d'essai de joints d'étanchéité (100 - 500) selon la revendication 1, dans lequel la longueur de joint d'étanchéité (L, L') est supérieure d'au moins un facteur 30 à la largeur de joint d'étanchéité (b, b').

3. Banc d'essai de joints d'étanchéité (100 - 500) selon la revendication 1 ou 2, dans lequel le corps d'échantillon (10, 20, 30, 40) est un corps d'échantillon de système, dans lequel le corps d'échantillon est constitué de plusieurs strates, est multicouche et/ou est constitué de plusieurs parties, dans lequel le joint d'étanchéité (11, 11') est un joint de dilatation, dans lequel le joint d'étanchéité (11, 11') est un joint d'expansion, dans lequel le joint d'étanchéité (11, 11') s'étend d'une surface de recouvrement (14) du corps d'échantillon (10, 20, 30) jusqu'à une surface de base du corps d'échantillon (10, 20, 30, 40), dans lequel le joint d'étanchéité (11, 11') s'étend entre deux faces latérales opposées entre elles du corps d'échantillon (10, 20, 30, 40), dans lequel le corps d'échantillon (10, 20, 30, 40) comprend deux corps partiels (12, 13, 12', 13') séparés l'un de l'autre par le joint d'étanchéité (11, 11'), dans lequel une portion supérieure du joint d'étanchéité (11, 11') est remplie, dans lequel le joint d'étanchéité (11, 11') est rempli au moins partiellement, dans lequel le joint d'étanchéité (11, 11') est rempli au moins partiellement avec un matériau de remplissage ou un système de remplissage qui relie entre eux les deux corps partiels (12, 13, 12', 13'), dans lequel la longueur de joint d'étanchéité (L, L') et la largeur de joint d'étanchéité (b, b') correspondent respectivement aux dilatations les plus importantes du joint d'étanchéité (11, 11') dans deux directions (x, y) orthogonales entre elles, dans lequel le joint d'étanchéité (11, 11') se rétrécit, au moins à certains endroits, dans une troisième direction (-z) perpendiculaire aux deux directions (x, y) orthogonales entre elles, dans lequel, dans le joint d'étanchéité (11, 11'), est disposée une matière de remplissage et/ou un profilé de remplissage (15), dans lequel, dans le joint d'étanchéité (11, 11'), est disposé un profilé de remplissage inférieur (17), plus particulièrement un profilé en mousse de PE (17), dans lequel le corps d'échantillon (10, 20, 30, 40) et/ou au moins un des corps partiels (12, 13, 12', 13') comprend du verre, de l'acier, de l'aluminium, une matière plastique, de l'asphalte, plus particulièrement un asphalte spécial, du béton, plus particulièrement un béton spécial, ou du béton de revêtement de chaussée, dans lequel la structure du corps d'échantillon (10, 20, 30, 40) correspond à celle d'un revêtement de chaussée, dans lequel la structure du corps d'échantillon (10, 20, 30, 40) correspond à celle d'une réalisation de joint d'étanchéité dans des ouvrages d'ingénierie de voirie et/ou de génie civil, dans lequel la structure du corps d'échantillon (10, 20, 30, 40) correspond à celle d'une réalisation de joint d'étanchéité dans des ouvrages d'ingénierie de construction de bâtiments et/ou de façades, dans lequel l'éprouvette (10, 20, 30, 40) est, à l'exception du joint (11, 11'), parallélépipédique, dans lequel le corps d'échantillon (10, 20, 30, 40) présente une hauteur (H) d'au moins 15 cm, une largeur (B) d'au moins 30 cm voire d'au moins 50 cm et/ou une profondeur (T) d'au moins 50 cm voire d'au moins 100 cm, dans lequel le corps d'échantillon (40) comprend deux joints d'étanchéité (11, 11') qui se croisent et/ou dans lequel le corps d'échantillon (40) comprend quatre corps partiels (12, 13, 12', 13') séparés les uns des autres par les deux joints d'étanchéité (11, 11') qui se croisent.

4. Banc d'essai de joints d'étanchéité (100 - 500) selon l'une des revendications précédentes, dans lequel, dans le joint d'étanchéité (11), est disposé un système auxiliaire cinématique.

5. Banc d'essai de joints d'étanchéité (100 - 500) selon l'une des revendications précédentes, dans lequel le corps d'échantillon (10 - 40) peut être sollicité mécaniquement au moyen de l'unité de sollicitation mécanique dans trois directions (x, y, z) non parallèles entre elles, par exemple orthogonales entre elles, dans lequel l'unité de sollicitation mécanique est conçue pour déplacer les unes par rapport aux autres des arêtes diagonalement opposées (K1, K2) du corps d'échantillon (10, 20, 30, 40) et/ou des flancs opposés du joint d'étanchéité avec jusqu'à au moins 3 Hz, jusqu'à au moins 8 Hz voire jusqu'à au moins 20 Hz dans chacune des au moins deux directions (x, y, z) non parallèles entre elles, de jusqu'à ± 2 mm, dans lequel l'unité de sollicitation mécanique est conçue pour déplacer les unes par rapport aux autres des arêtes diagonalement opposées (K1, K2) du corps d'échantillon (10, 20, 30, 40) et/ou des flancs opposés du joint d'étanchéité avec jusqu'à au moins 3 Hz, jusqu'à au moins 8 Hz voire jusqu'à au moins 20 Hz dans une direction verticale (z) de jusqu'à ± 5 mm, dans lequel l'unité de sollicitation mécanique est conçue pour solliciter mécaniquement le corps d'échantillon (10, 20, 30, 40) de manière indépendante dans les deux directions (x, y, z) non parallèles entre elles, dans lequel l'unité de sollicitation mécanique est conçue de manière modulaire, dans lequel l'unité de sollicitation mécanique est conçue pour solliciter mécaniquement plusieurs corps d'échantillon (10, 20, 30, 40) simultanément dans les au moins eux directions (x, y, z) non parallèles entre elles, dans lequel l'unité de sollicitation mécanique (160, 260, 260', 360, 460, 560) est conçue pour soumettre le corps d'échantillon (10, 20, 30, 40) à des contraintes en traction et en compression, dans lequel l'unité de sollicitation mécanique (160, 260, 260', 360, 460, 560) est conçue pour solliciter le corps d'échantillon (10, 20, 30, 40) dans au moins une des au moins deux directions (x, y, z) non parallèles entre elles avec des forces d'au moins 1 N ou d'au moins 10 N et/ou jusqu'à 150 kN voire jusqu'à 250 kN et/ou dans lequel l'unité de sollicitation mécanique (160, 260, 260', 360, 460, 560) peut être contrôlée voire régulée.

6. Banc d'essai de joints d'étanchéité (100 - 500) selon l'une des revendications précédentes, dans lequel le dispositif d'entraînement linéaire (291, 292, 293, 391, 392, 393, 491, 492, 493) comprend un moteur, plus particulièrement un moteur électrique ou un vérin ainsi qu'une pompe hydraulique ou une pompe pneumatique reliée fluidiquement avec le vérin et/ou dans lequel l'unité de sollicitation mécanique (160, 260, 260', 360, 460, 560) comprend une unité de sollicitation par roulage comprenant une roue (490) pouvant être abaissée sur le corps d'échantillon (10, 20, 30, 40) et/ou pouvant être entraînée par un moteur.

7. Banc d'essai de joints d'étanchéité (100 - 500) selon l'une des revendications précédentes, dans lequel l'unité de sollicitation mécanique (160, 260, 260', 360, 460, 560) comprend un logement (280, 281,282, 380, 381, 382, 481, 481, 580, 581, 582) dans lequel le corps d'échantillon (10, 20, 30, 40) peut être fixé.

8. Banc d'essai de joints d'étanchéité (100 - 500) selon la revendication 7, dans lequel le logement comprend deux plaques de serrage (281, 381, 481, 581) qui sont mobile l'une par rapport à l'autre dans chacune des au moins deux directions (x, y, z) non parallèles entre elles, par exemple quatre plaques de serrage (281, 381, 481, 581) qui sont mobile les unes par rapport aux autres, par paires, dans au moins une des deux directions (x, y, z) non parallèles entre elles, dans lequel, sur chacune des plaques de serrage (281, 381, 481, 581), est disposé un support (282, 382, 582) pour un corps partiel (12, 13, 12', 13') correspondant du corps d'échantillon (10, 20, 30, 40), fixé à la plaque de serrage (281, 381, 481, 581) correspondante.

9. Banc d'essai de joints d'étanchéité (100 - 500) selon l'une des revendications précédentes, dans lequel la chambre climatique (150) comprend une unité d'irradiation, une unité de régulation de température, un capteur de température, une unité de calcul, une unité d'humidification, une unité de sollicitation chimique, un capteur d'humidité et/ou une unité d'alimentation en gaz et/ou dans lequel la chambre climatique (150) comprend des raccords pour une unité d'alimentation en fluides et/ou d'évacuation des fluides (155).

10. Banc d'essai de joints d'étanchéité (100 - 500) selon l'une des revendications précédentes, comprenant en outre une unité de détection (170) disposée par exemple à proximité du joint d'étanchéité (11, 11').

11. Banc d'essai de joints d'étanchéité (100 - 500) selon la revendication 10, dans lequel l'unité de détection (170) comprend un capteur de force pour le joint d'étanchéité (11), un capteur de dilatation pour le joint d'étanchéité (11, 11') et/ou un capteur d'étanchéité pour le joint d'étanchéité.

12. Banc d'essai de joints d'étanchéité (100 - 500) selon la revendication 10 ou 11, dans lequel l'unité de détection (170) comprend un détecteur optique disposé par exemple en dessous du joint d'étanchéité (11, 11'), plus particulièrement une caméra, dans lequel l'unité de détection comprend un détecteur de liquide disposé par exemple en dessous du joint d'étanchéité (11, 11') et/ou une ventouse à dépression disposée sur le joint d'étanchéité (11, 11').

13. Banc d'essai de joints d'étanchéité (100 - 500) selon l'une des revendications précédentes, comprenant en outre une unité de régulation et/ou de commande (110), qui est reliée avec l'unité de sollicitation mécanique (160, 260, 260', 360, 460, 560), la chambre climatique (150), l'unité de détection (170), l'unité de sollicitation chimique et/ou l'unité d'alimentation et/ou d'évacuation de fluides (155).

14. Banc d'essai de joints d'étanchéité (100 - 500) selon la revendication 13, dans lequel l'unité de régulation et/ou de commande (110) est conçue pour soumettre le corps d'échantillon (10 - 30), au moyen de l'unité de sollicitation mécanique (160, 260, 260', 360, 460, 560) et le chambre climatique (150), à un profil de sollicitation mécanique et climatique combiné et/ou dans lequel l'unité de régulation et/ou de commande (110) est conçue pour utiliser les valeurs de mesure transmises par le capteur de dilatation et/ou les valeurs de mesure transmises par le capteur de force pour le contrôle et/ou la régulation de l'unité de sollicitation mécanique (160, 260, 260', 360, 460, 560).

15. Banc d'essai de joints d'étanchéité (100 - 500) selon l'une des revendications 11 à 14, comprenant en outre une unité d'analyse reliée avec le capteur de force, qui est conçue pour analyser les valeurs de mesure transmises par le capteur de force à l'aide de critères prédéterminés et/ou les afficher sur un moniteur.
